# EUROPÄISCHE PATENTSCHRIFT

(11) **EP 3 915 172 B1**
(45) Veröffentlichungstag und Bekanntmachung des Hinweises auf die Patenterteilung: **25.06.2025**
(21) Anmeldenummer: 19829232.8
(22) Anmeldetag: 27.12.2019
(51) Int. Cl.: H01R 13/6582, H01R 4/18, H01R 9/05, H01R 13/6592, H01R 13/6597

(54) **ETHERNET-STECKVERBINDER FÜR EIN KRAFTFAHRZEUG UND STECKVERBINDERANORDNUNG MIT EINEM ETHERNET-STECKVERBINDER**
ETHERNET CONNECTOR FOR A MOTOR VEHICLE, AND CONNECTOR ASSEMBLY HAVING AN ETHERNET CONNECTOR
CONNECTEUR ETHERNET POUR UN VÉHICULE À MOTEUR ET ENSEMBLE CONNECTEUR COMPORTANT UN CONNECTEUR ETHERNET

(30) Priorität: 22.01.2019 DE 102019200713
(43) Veröffentlichungstag der Anmeldung: 01.12.2021
(73) Patentinhaber: Robert Bosch GmbH, 70442 Stuttgart (DE)
(72) Erfinder: KRAEMER, Thomas, 75173 Pforzheim (DE)
(86) Internationale Anmeldenummer: PCT/EP2019/087054
(87) Internationale Veröffentlichungsnummer: WO 2020/151896

(56) Entgegenhaltungen:
- DE-T2- 69 311 185
- DE-T2- 69 311 185
- GB-A- 2 104 312
- GB-A- 2 104 312
- US-A1- 2015 236 434
- US-A1- 2015 236 434
- US-B1- 6 203 369
- US-B1- 6 203 369

## Beschreibung

### Gebiet der Erfindung

Die Erfindung betrifft einen Ethernet-Steckverbinder für ein Kraftfahrzeug und eine Steckverbinderanordnung mit einem Ethernet-Steckverbinder.

### Stand der Technik

Aus dem Stand der Technik, z.B. für Kraftfahrzeug-Anwendungen, sind elektrische Steckverbinder bekannt, die mit komplementären Gegensteckverbindern zu einer Steckverbinderanordnung zusammengesteckt werden können.

Mit zunehmender Sensor-Ausstattung und auf dem Weg zum autonomen Fahren wird es notwendig, eine stetig wachsende Informationsmenge zu verarbeiten. Um die Datenmengen zu bewältigen wird der Einsatz von Ethernet-Schnittstellen und Ethernet-Leitungen im Kraftfahrzeugbereich angedacht. Diese sollen u.a. mittels sogenannter Ethernet-Protokolle eine ausreichend hohe Datenübertragungsrate ermöglichen. Aus dem Stand der Technik sind herkömmliche Ethernet-Steckverbinder, sogenannte RJ45-Stecker, bekannt. In der DE 10 2012 111 125 B4 ist ein derartiger RJ45-Ethernet-Stecker beschrieben.

Aus der DE 693 11 185 T2 ist ein Steckverbinder nach dem Oberbegriff des Anspruchs 1 mit nach außen gebogenen Kontaktlamellen eines Schirmblechs bekannt.

Aus der GB 2 104 312 A ist ein weiterer Steckverbinder mit Kontaktlamellen eines Schirmblechs bekannt, wobei die Kontaktlamellen nach innen gebogen sind.
Sitz: Stuttgart, Registergericht: Amtsgericht Stuttgart, HRB 14000;
Aufsichtsratsvorsitzender: Prof. Dr. Stefan Asenkerschbaumer; Geschäftsführung: Dr. Stefan Hartung,
Dr. Christian Fischer, Filiz Albrecht, Dr. Markus Hevn, Dr. Markus Forschner, Rolf Naiork

### Offenbarung der Erfindung

Die Erfindung geht aus von der Erkenntnis, dass im Kraftfahrzeug-Bereich sehr hohe Anforderungen bestehen bezüglich der Langlebigkeit der Komponenten (z.B. Steckverbinder und Schnittstellen) sowie hinsichtlich der Sicherheit gegen Kurzschlüsse, Wackelkontakte oder Unterbrechungen der Signalübertragung. So ist gerade beim autonomen Fahren unbedingt zu vermeiden, dass sicherheitsrelevante Informationen, z.B. von Kameras oder Sensoren, aufgrund eines Wackelkontakts nicht verarbeitet werden können. Diese Sicherheitsanforderungen sind über eine Lebensdauer von z.B. mindestens 10 Jahren oder sogar mindestens 15 Jahren einzuhalten und zwar für alle möglichen äußeren klimatischen Faktoren wie z.B. Temperatur, Feuchtigkeit, Luftdruck oder ähnlichem. Sie müssen aber auch für alle möglichen Betriebszustände gelten, z.B. bei einer Fahrt über Schotterpisten, durch Schlaglöcher, bei hohen Beschleunigungsraten oder Drehraten.

Gleichzeitig steigt durch die Zahl an Sensoren und durch den Datenaustausch zwischen unterschiedlichen Steuergeräten die zu verbauende Kabellänge in Kraftfahrzeugen immer mehr an, so dass eine Reduzierung der Kabelanzahl bzw. der Gesamtkabellänge wünschenswert ist. Auch sollen wegen der Vielzahl von Steckverbindern, die an ein Steuergerät angeschlossen werden müssen, die Abmessungen der Ethernet-Steckverbinder möglichst gering gehalten werden. Schließlich ist eine gute Schirmung auch am Übergang vom Ethernet-Steckverbinder zum Gegensteckverbinder erforderlich, um das Verfälschen der zu übertragenden Signale zu minimieren oder sogar auszuschließen.

Es hat sich gezeigt, dass herkömmliche RJ45-Ethernet-Steckverbinder diesen Sicherheitsanforderungen nicht in ausreichendem Maße gerecht werden können. Sie sind von ihrer Geometrie bezüglich des Gegensteckverbinders aber auch wegen der in RJ45-Steckverbindern üblicherweise verwendeten Schneid-Klemm-Verbindung des Steckverbindergehäuses zu den Leitungen nicht ausreichend stabil gegen Wackelkontakte und z.B. gegen starke Schüttelbelastungen. Sie bauen zudem recht breit, benötigen recht starre Kabel mit 8 Leitungen und sind auch nicht in ausreichendem Maße geschirmt. Damit sind sie grundsätzlich für den Einsatz in Kraftfahrzeugen nicht geeignet.

Es kann daher ein Bedarf bestehen, einen Ethernet-Steckverbinder für Kraftfahrzeuge bereitzustellen, der über Lebensdauer (mindestens 10 Jahre oder sogar mindestens 15 Jahre) den klimatischen Bedingungen und den Belastungen im Betrieb widersteht und zwar sowohl hinsichtlich der Anbindung der Leitungen im Steckverbinder als auch am Übergang vom Steckverbinder zum Gegensteckverbinder. Gleichzeitig sollen seine Abmessungen kompakt sein und er soll mit möglichst wenigen Leitungen die Übertragung hoher Datenraten ermöglichen. Darüber hinaus soll er eine sehr gute Schirmung auch beim Übergang zum Gegensteckverbinder bereitstellen. Der Ethernet-Steckverbinder soll auch robust beim Handling sein, so dass sichergestellt wird, dass keine funktionalen Elemente beim Transport oder bei der Montage beschädigt werden. Schließlich ist es wünschenswert, dass der Ethernet-Steckverbinder für Kraftfahrzeuge auf einen als Standard-Schnittstelle ausgebildeten Gegensteckverbinder aufgesteckt bzw. mit diesem zusammengesteckt werden kann. Ein Beispiel für eine derartige Standard-Schnittstelle ist z.B. die BOSCH Microflex-Schnittstelle ("Miniaturisierte Flexible Interface Familie basierend auf 0,5 mm standardisieren Kontaktpins", Details dazu abrufbar am Anmeldedatum z.B. unter http://bosch-open-interfaces.de/de/home/).

### Vorteile der Erfindung

Dieser Bedarf kann durch den Gegenstand der vorliegenden Erfindung gemäß den unabhängigen Ansprüchen gedeckt werden. Vorteilhafte Ausführungsformen der vorliegenden Erfindung sind in den abhängigen Ansprüchen beschrieben.

Gemäß einem ersten Aspekt der Erfindung wird ein Ethernet-Steckverbinder nach Anspruch 1 für ein Kraftfahrzeug zum Zusammenstecken entlang einer Einsteckrichtung mit einem Gegensteckverbinder vorgeschlagen. Der Ethernet-Steckverbinder weist ein Steckverbindergehäuse mit wenigstens zwei Kontaktkammern sowie ein Schirmblech auf. In jeder Kontaktkammer ist ein Kontaktelement angeordnet. In jedes Kontaktelement ist ein Gegenkontaktelement einsteckbar, wobei an jedem Kontaktelement an seinem bezüglich der Einsteckrichtung hinteren Ende eine Leitung angebracht ist, also z.B. elektrisch und mechanisch verbunden ist, z.B. durch eine Crimp-Verbindung. Die an dem Kontaktelement angebrachten Leitungen sind in einem bezüglich der Einsteckrichtung hinteren Abschnitt zu einem Ethernet-Kabel zusammengefasst und sie sind dabei von einem Schirmleiter umgeben. Das Schirmblech umgibt das Steckverbindergehäuse zum überwiegenden Teil. Das Schirmblech weist ein Verbindungsmittel auf, mit dem es an dem Schirmleiter des Ethernet-Kabels elektrisch angeschlossen ist. An einem bezüglich der Einsteckrichtung vorderen Abschnitt des Schirmblechs ist wenigstens eine Kontaktlamelle zur Kontaktierung eines Schirm-Gegenkontaktelements angeordnet. Die wenigstens eine Kontaktlamelle ist derart in den vom Schirmblech umschlossenen Raum umgebogen, dass die wenigstens eine Kontaktlamelle zumindest abschnittsweise zwischen einer ersten Wand des Schirmblechs und dem Steckverbindergehäuse angeordnet ist.

Dadurch wird vorteilhaft bewirkt, dass der Ethernet-Steckverbinder über seine gesamte Erstreckung besonders gut geschirmt ist, auch über die Verbindungsstelle zum Gegensteckverbinder hinweg.

Vorteilhaft wird auch das Risiko verringert, dass die wenigstens eine Kontaktlamelle beim Transport beschädigt wird, da sie nur wenig oder gar nicht über die Außenkontur aus Steckverbindergehäuse und Schirmblech hinausragt. Dadurch baut der Ethernet-Steckverbinder auch besonders kompakt.

Vorteilhaft ist weiterhin, dass der Ethernet-Steckverbinder grundsätzlich auch mit lediglich genau zwei Kontakten und damit mit genau zwei Leitungen auskommt, über welche die Daten mit einer hohen Datenrate übertragen werden - somit kann das (Ethernet)Kabel, das an den Ethernet-Steckverbinder angeschlossen ist sehr flexibel, also biegsam, ausgebildet sein und es wird Material gespart (weniger Leitungslänge, da weniger Leitungen benötigt werden). Es versteht sich, dass auch Ethernet-Steckverbinder mit z.B. vier (Kontakt)Kammern und vier Kontaktelementen und vier daran angeschlossenen Leitungen möglich sind. Bevorzugt wird eine gerade Anzahl von Kontaktkammern und Kontaktelementen verwendet, wenngleich eine ungerade Anzahl nicht ausgeschlossen ist.

Vorteilhaft ist durch das z.B. aus einem elektrisch isolierenden Kunststoff ausgebildete Steckverbindergehäuse mit seinen (Kontakt)Kammern sowie durch die darin aufgenommenen Kontakte zudem eine besonders robuste und langlebige sowie wartungsfreundliche Konstruktion geschaffen. Denn die Kontakte können z.B. durch eine Crimpverbindung besonders sicher an der Leitung festgelegt werden. Ist ein Kontakt beschädigt kann er leicht ausgetauscht werden. Ist das Steckverbindergehäuse beschädigt kann auch dieses leicht ausgetauscht werden, indem einfach die Kontakte aus den (Kontakt)Kammern entfernt und in ein neues Steckverbindergehäuse eingesetzt werden.

Das Steckverbindergehäuse weist bevorzugt an seiner bezüglich der Einsteckrichtung vorderen Seite für jedes aufzunehmende Kontaktelement eine Öffnung auf, durch welche hindurch ein Gegenkontaktelement, z.B. in Form eines Pins, in das Kontaktelement eingesteckt werden kann.

Die Anzahl der Kontaktlamellen kann z.B. der Anzahl der Kontaktkammern im Steckverbindergehäuse entsprechen. Dabei kann - quer zur Einsteckrichtung betrachtet - z.B. unter jeder Kontaktkammer für ein Kontaktelement eine Kontaktlamelle angeordnet sein. Dadurch kann ein besonders symmetrischer und kompakter Aufbau des Steckverbinders bewirkt werden. Sind mehr als zwei Kontaktkammern für Kontaktelemente vorgesehen kann es ausreichen, wenn lediglich genau eine Kontaktlamelle oder genau zwei Kontaktlamellen im Ethernet-Steckverbinder vorgesehen sind. Durch die Verwendung von wenigstens zwei Kontaktlamellen wird eine Redundanz geschaffen, die auch bei Ausfall einer Schirmverbindung dennoch die Schirmung hin zum Gegensteckverbinder sicherstellt.

Die wenigstens eine Kontaktlamelle ist zum (elektrischen) Kontaktieren eines Schirm-Gegenkontaktelements ausgebildet. Dadurch, dass die wenigstens eine Kontaktlamelle zwischen der ersten Wand des Schirmblechs und dem Steckverbindergehäuse angeordnet ist kann ein zwischen die wenigstens eine Kontaktlamelle und die erste Wand eingestecktes Schirm-Gegenkontaktelement sowohl von der wenigstens einen Kontaktlamelle als auch von der ersten Wand elektrisch kontaktiert werden. Dadurch ergibt sich eine z.B. bei Schüttelbelastungen oder bei thermischen Wechseln besonders sichere und dauerhafte elektrische Kontaktierung.

Der Begriff "Ethernet-Steckverbinder" ist hier so zu verstehen, dass der Steckverbinder zur Übertragung von Daten ausgebildet ist und für Datenraten von wenigstens 1GBit/s, besonders bevorzugt wenigstens 5GBit/s und ganz besonders bevorzugt von wenigstens 10GBit/s geeignet ist. Dies sind die Anforderungen, die bei der Verwendung von Ethernet-Datenübertragung im Kraftfahrzeug erfüllt werden müssen, z.B. für autonomes Fahren.

Der Begriff "für Kraftfahrzeuge" ist hier so zu verstehen, dass der Ethernet-Steckverbinder bei der Verwendung in einem Kraftfahrzeug unter allen Fahrsituationen und Umweltsituationen (z.B. Temperaturbereich -40°C bis +80°C, stark schwankende Luftdrücke und Luftfeuchtigkeitswerte, Beschleunigungseinwirkung durch Fahren über Schlaglöcher, über Schotterpisten, etc.) und über Lebensdauer (mindestens 10 Jahre bzw. sogar mindestens 15 Jahre) geeignet ist, eine zuverlässige, unterbrechungsfreie und kurzschlussfreie Verbindung mit einem Gegensteckverbinder zu ermöglichen. Mit anderen Worten: er soll geeignet ausgebildet sein, den in der Automobilindustrie gängigen Anforderungen für die Übertragung auch sicherheitsrelevanter Signale zu genügen.

Unter dem "vorderer Abschnitt" des Schirmblechs kann z.B. ein Abschnitt verstanden werden, der z.B. höchstens 35%, bevorzugt höchstens 25% der Länge des Schirmblechs ausmacht.

Das am Schirmblech vorgesehene Verbindungsmittel kann z.B. durch Crimplaschen ausgebildet sein. Crimplaschen ermöglichen eine besonders kostengünstige Herstellung des Schirmblechs und eine besonders einfache, dauerhafte und sichere Montage des Schirmblechs an den Schirmleiter des Ethernet-Kabels. Das Verbindungsmittel kann sich bezüglich der Einsteckrichtung betrachtet am hinteren Ende des Schirmblechs befinden. Es sei angemerkt, dass auch andere Verbindungsmittel möglich sind.

Die wenigstens eine Kontaktlamelle kann z.B. bei der Herstellung des Ethernet-Steckverbinders vom Schirmblech zunächst nach vorne (entlang der Einsteckrichtung) als eine Art Lasche abragen, z.B. von der ersten Wand des Schirmblechs. Sie kann dann in einem weiteren Fertigungsschritt nach hinten umgebogen werden um ca. 180° - sie ragt dann mit ihrem freien Ende entgegen der Einsteckrichtung nach hinten. Wird anschließend das Schirmblech am Steckverbindergehäuse montiert so kommt die wenigstens eine Kontaktlamelle zwischen der ersten Wand und dem Steckverbindergehäuse zu liegen. Selbstverständlich ist es auch möglich, die Kontaktlamelle zunächst seitlich (quer zur Einsteckrichtung) abragen zu lassen und sie dann nach innen umzubiegen.

Bevorzugt kann die wenigstens eine Kontaktlamelle im fertig hergestellten Ethernet-Steckverbinder zu mehr als 70% ihrer Länge, bevorzugt zu mehr als 90% ihrer Länge, zwischen der ersten Wand und einer dieser ersten Wand gegenüberliegenden Steckverbindergehäusewand angeordnet sein. Mit anderen Worten: die Kontaktlamelle ragt nur unwesentlich über die Außenkontur des Ethernet-Steckverbinders hinaus, wodurch eine Beschädigung beim Transport (z.B. durch Verhaken) vermieden wird.

Das Schirmblech umgibt das Steckverbindergehäuse an dessen Außenseite z.B. U-förmig, also in Umfangsrichtung (um die Einsteckrichtung herum betrachtet) um ca. 270° bzw. an 3 Seiten eines z.B. rechteckig ausgebildeten Steckverbinders. Auch ein ringförmiges Umschließen des Steckverbindergehäuses ist denkbar, wodurch die Umschließung nahezu 360°, genau 360° oder sogar mehr als 360° beträgt. Je nach Ausführung des Gegensteckverbinders ist auch ein Umgeben des Steckverbindergehäuses in Umfangsrichtung an z.B. lediglich zwei Seiten bzw. um wenigstens 50% ausreichend, also mehr als 180°.

Eine Weiterbildung sieht vor, dass die wenigstens eine Kontaktlamelle derart in den vom Schirmblech umschlossenen Raum umgebogen ist, dass ein vom Gegensteckverbinder in den Ethernet-Steckverbinder zwischen die wenigstens eine Kontaktlamelle und die erste Wand des Schirmblechs einsteckbares Schirm-Gegenkontaktelement von der wenigstens einen Kontaktlamelle elektrisch kontaktiert wird. Dadurch wird vorteilhaft eine besonders sichere zweiseitige elektrische und mechanische Kontaktierung bewirkt, die auch bei Vibrationen und Schüttelbelastungen die Aufrechterhaltung der Schirmung sicherstellt.

Eine Weiterbildung sieht vor, dass die wenigstens eine Kontaktlamelle einen geprägten Kontaktpunkt aufweist, wobei die erste Wand des Schirmblechs einen geprägten weiteren Kontaktpunkt aufweist, der dem Kontaktpunkt der Kontaktlamelle quer zur Einsteckrichtung (E) betrachtet gegenüberliegt. Dadurch wird vorteilhaft die elektrische Kontaktierung an einem definierten Punkt besonders sicher und zuverlässig bewirkt.

Eine Weiterbildung sieht vor, dass die wenigstens eine Kontaktlamelle einstückig mit dem Schirmblech ausgebildet ist. Dadurch lässt sich vorteilhaft das Schirmblech besonders einfach und kostengünstig herstellen und es sind keine zusätzlichen Übergangswiderstände zu berücksichtigen.

Alternativ kann vorgesehen sein, dass das Schirmblech ein Stanz-Biegeteil ist. Dadurch wird vorteilhaft eine besonders einfache und kostengünstige Herstellung gewährleistet.

Eine Weiterbildung sieht vor, die Leitungen im Ethernet-Kabel umeinander verdrillt verlaufen. Dadurch können vorteilhaft äußere Störeinflüsse ausgemittelt werden. Beispielsweise können in je zwei Leitungen identische Signale mit um 180° verschobener Phase übermittelt werden. Durch den 180°-Phasenversatz können äußere Störeinflüsse zusätzlich ausgemittelt werden.

Eine Weiterbildung sieht vor, dass die Kontaktkammern jeweils einen Kontaktkammer-Hinterschnitt aufweisen, wobei die Kontaktelemente jeweils eine Kontaktelement-Rastlanze aufweisen, so dass die in die Kontaktkammer eingesteckten Kontaktelemente mit der Kontaktelement-Rastlanze am Kontaktkammer-Hinterschnitt in der Kontaktkammer verrasten können. Dadurch wird die Montage der Kontaktelemente im Steckverbindergehäuse vereinfacht und die Kontaktelemente werden sicher im Steckverbindergehäuse gehalten.

Alternativ kann vorgesehen sein, dass die Kontaktkammern jeweils eine Kontaktkammer-Rastlanze aufweisen, wobei die Kontaktelemente jeweils einen Kontaktelement-Hinterschnitt aufweisen, so dass die in die Kontaktkammern eingesteckten Kontaktelemente mit dem Kontaktelement-Hinterschnitt an der Kontaktkammer-Rastlanze in der Kontaktkammer verrasten können. Dadurch wird die Montage der Kontaktelemente im Steckverbindergehäuse vereinfacht und die Kontaktelemente werden sicher im Steckverbindergehäuse gehalten.

Es versteht sich, dass zur zusätzlichen Sicherung der Kontaktelemente im Steckverbindergehäuse auch noch ein weiteres Verriegelungselement, ein sogenanntes Sekundärverriegelungselement, vorgesehen sein kann. Dieses kann z.B. quer zur Einsteckrichtung durch das Steckverbindergehäuse geschoben werden und einen Hinterschnitt des Kontaktelements hintergreifen, so dass eine Verlagerung des Kontaktelements entgegen der Einsteckrichtung, also aus der Kontaktkammer heraus, nicht mehr möglich ist. In diesem Fall dient die Kontaktelement-Rastlanze bzw. die Kontaktkammer-Rastlanze als Primärverriegelung bzw. Primärverrastung und wird durch das Sekundärverriegelungselement mechanisch entlastet.

Eine Weiterbildung sieht vor, dass der Ethernet-Steckverbinder dazu ausgebildet ist, mit einem Gegensteckverbinder in Form einer Standard-Schnittstelle zusammengesteckt zu werden. Die Standard-Schnittstelle kann z.B. eine BOSCH-Microflex-Schnittstelle sein. Dadurch wird vorteilhaft ein besonders einfach austauschbarer und damit kostengünstig herstellbarer Ethernet-Steckverbinder geschaffen.

Die BOSCH Microflex-Schnittstelle sieht z.B. zweireihige Gegensteckverbinder vor mit z.B. 12, 16, 19, 26, 29, 36, 45 oder 52 Gegenkontaktelementen in Form von (Kontakt)Pins. Diese Pins haben z.B. einen rechteckigen Querschnitt von 0,5mm x 0,4mm. Zwischen den beiden Reihen kann z.B. ein Abstand von 1,5mm vorgesehen sein (Pinmitte zu Pinmitte). Innerhalb der Reihe kann z.B. ein Abstand von 1,8mm vorgesehen sein (Pinmitte zu Pinmitte). Weiterhin kann z.B. eine vierreihige Ausführung mit z.B. 26, 32, 41, 52, 61, 72, 93 oder 104 Gegenkontaktelementen vorgesehen sein.

Es versteht sich, dass auch andere, insbesondere hochpolige bzw. vielpolige (mehr als 10 Gegenkontaktelemente), Standard-Schnittstellen verwendet werden können.

Gemäß einem zweiten Aspekt der Erfindung wird Steckverbinderanordnung vorgeschlagen. Die Steckverbinderanordnung umfasst einen Gegensteckverbinder mit wenigstens zwei Gegenkontaktelementen und wenigstens einem Schirm-Gegenkontaktelement sowie einen Ethernet-Steckverbinder, wie er oben beschrieben worden ist. Dabei ist vorgesehen, dass der Ethernet-Steckverbinder mit dem Gegensteckverbinder zusammensteckbar ist.

Dadurch wird vorteilhaft auch beim Übergang von einem Ethernet-Kabel in eine Komponente bzw. auf eine Schnittstelle gewährleistet, dass die Schirmung der Datenleitungen über die gesamte Strecke, auch innerhalb der Schnittstelle, gewährleistet werden kann und damit ein Verfälschen der Datensignale vermieden wird.

Eine Weiterbildung sieht vor, dass die wenigstens zwei Gegenkontaktelemente und das wenigstens eine Schirm-Gegenkontaktelement identisch ausgebildet sind. Dadurch wird eine besonders einfache Herstellung des Gegensteckverbinders ermöglichst. Außerdem kann so ein und derselbe Gegensteckverbinder für verschiedene Verwendungszwecke eingesetzt werden. Denn in anderen Anwendungen kann z.B. das Schirm-Gegenkontaktelement mit einer anderen Funktionalität verwendet werden, z.B. für eine Bestromung einer daran angeschlossenen Komponente oder für die Übertragung von Daten.

Es ist möglich, dass die wenigstens zwei Gegenkontaktelemente und das wenigstens eine Schirm-Gegenkontaktelement einen rechteckigen Querschnitt oder sogar einen quadratischen Querschnitt aufweisen.

Eine Weiterbildung sieht vor, dass der Gegensteckverbinder in der Form einer Standard-Schnittstelle ausgebildet ist, wobei die Standard-Schnittstelle insbesondere eine BOSCH-Microflex-Schnittstelle ist, die insbesondere zweireihig oder vierreihig ausgebildet ist. Dadurch wird vorteilhaft eine besonders einfach austauschbare und damit kostengünstig herstellbare Steckverbinderanordnung geschaffen.

### Zeichnungen

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.

Es zeigen
- Fig. 1a:: eine perspektivische Darstellung eines Ethernet-Steckverbinders;
- Fig. 1b:: eine perspektivische Darstellung des Schirmblechs des Ethernet-Steckverbinders aus Fig. 1a vor der Montage am Steckverbindergehäuse;
- Fig. 2:: eine perspektivische, teilweise geschnittene Darstellung einer Steckverbinderanordnung mit einem Ethernet-Steckverbinder aus Fig. 1a.

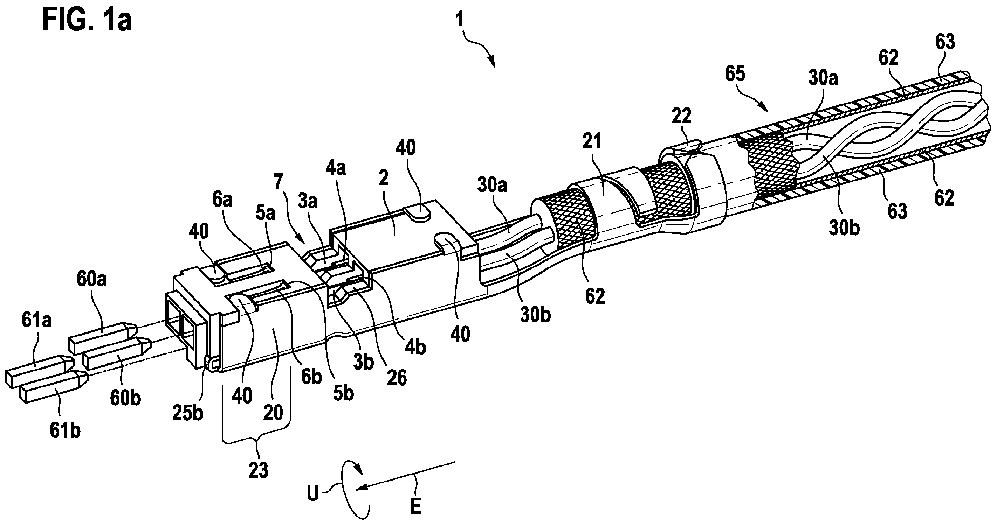

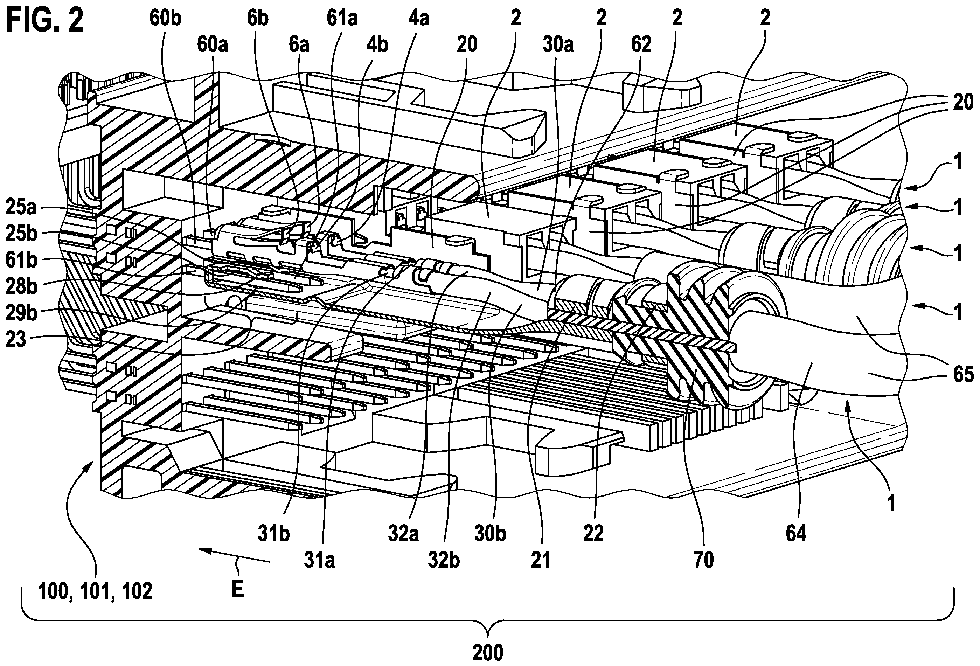

Figur 1a zeigt beispielhaft eine perspektivische Darstellung eines Ethernet-Steckverbinders 1 für ein Kraftfahrzeug zum Zusammenstecken entlang einer Einsteckrichtung E mit einem Gegensteckverbinder 100 (siehe Fig. 2). Der Ethernet-Steckverbinder 1 weist auf: ein Steckverbindergehäuse 2 mit zwei Kontaktkammern 3a, 3b sowie ein Schirmblech 20. In jeder Kontaktkammer 3a, 3b ist ein Kontaktelement 4a, 4b angeordnet, wobei in jedes Kontaktelement 4a, 4b ein Gegenkontaktelement 60a, 60b einsteckbar ist. An jedem Kontaktelement 4a, 4b ist an seinem bezüglich der Einsteckrichtung E hinteren Ende eine Leitung 30a, 30b angebracht, wobei die an dem Kontaktelement 4a, 4b angebrachten zwei Leitungen 30a, 30b in einem bezüglich der Einsteckrichtung E hinteren Abschnitt zu einem Ethernet-Kabel 65 zusammengefasst sind und dabei von einem Schirmleiter 62 umgeben sind, das z.B. als Schirmgeflecht ausgebildet sein kann. Die Leitungen 30a, 30b verlaufen im Ethernet-Kabel 65 umeinander verdrillt, um so die Signalqualität zu verbessern.

Das Schirmblech 20 umgibt das Steckverbindergehäuse 2 entlang einer Umfangsrichtung U um die Einsteckrichtung E herum zum überwiegenden Teil, in Fig. 1a an drei Seiten in U-Form. Das Schirmblech 20 weist ein Verbindungsmittel 21 in Form von Crimplaschen auf, mit dem es an dem Schirmleiter 62 des Ethernet-Kabels 65 elektrisch angeschlossen ist. Ein weiteres Verbindungsmittel 22, hier ausgebildet als ein Paar Crimplaschen, ist am Ende des Schirmblechs 20 angeordnet und dient dazu, das Schirmblech 20 an einer Isolierung 63 des Ethernet-Kabels 65 zu befestigen. Alternativ oder zusätzlich kann das weitere Verbindungsmittel auch an einer Einzeladerabdichtung 70 befestigt sein (siehe Figur 2).

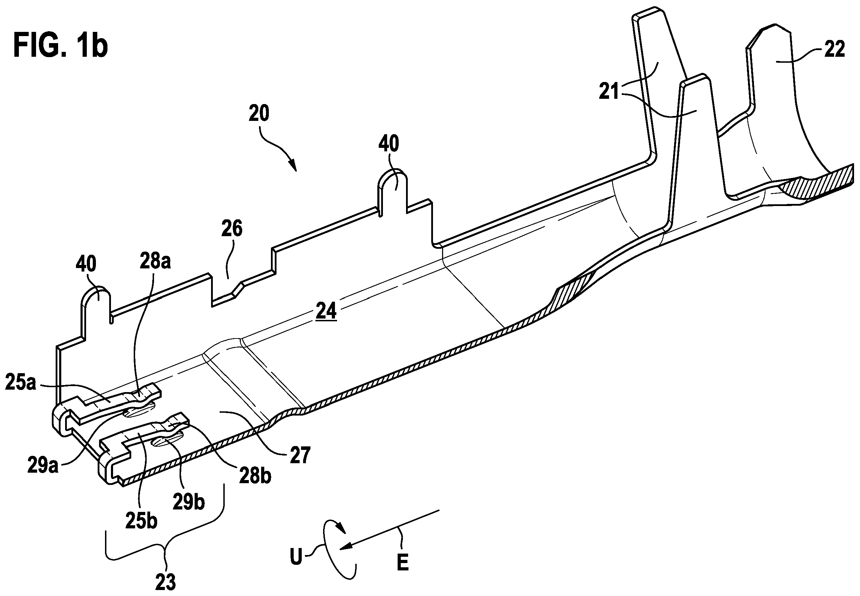

Das Schirmblech ist hier beispielhaft mit vier Laschen 40 an der in der Figur oberen Seite des Steckverbindergehäuses 2 befestigt. Zunächst wird somit das Steckverbindergehäuse 2 in dem vom Schirmblech umschlossenen Raum 24 angeordnet, also in den Hohlraum der U-Form platziert, wobei die vier Laschen 40 nach oben wegstehen (siehe Fig. 1b). Anschließend werden die vier Laschen 40 um das Steckverbindergehäuse nach innen gebogen und fixieren so das Schirmblech 20 am Steckverbindergehäuse 2 verliersicher.

Die Kontaktkammern 3a, 3b weisen jeweils einen Kontaktkammer-Hinterschnitt 5a, 5b auf. Die Kontaktelemente 4a, 4b weisen jeweils eine Kontaktelement-Rastlanze 6a, 6b auf (siehe auch Fig. 2), so dass die in die Kontaktkammer 3a, 3b eingesteckten Kontaktelemente 4a, 4b mit der Kontaktelement-Rastlanze 6a, 6b am Kontaktkammer-Hinterschnitt 5a, 5b in der Kontaktkammer 3a, 3b verrasten. Grundsätzlich ist auch eine andere Ausführung denkbar (hier nicht dargestellt), bei der die Kontaktkammern 3a, 3b jeweils eine Kontaktkammer-Rastlanze aufweisen, wobei die Kontaktelemente 4a, 4b jeweils einen Kontaktelement-Hinterschnitt aufweisen, so dass die in die Kontaktkammern 3a, 3b eingesteckten Kontaktelemente 4a, 4b mit dem Kontaktelement-Hinterschnitt an der Kontaktkammer-Rastlanze in der Kontaktkammer 3a, 3b verrasten können.

Außerdem weisen das Steckverbindergehäuse 2 eine Steckverbindergehäuse-Sekundärverriegelungsaussparung 7 und das Schirmblech 20 eine Schirmblech-Sekundärverriegelungsaussparung 26 auf, die miteinander fluchten. In diese kann, wenn der Ethernet-Steckverbinder 1 mit dem Gegensteckverbinder 100 verbunden ist, quer zur Einsteckrichtung E ein Sekundärverriegelungselement eingeschoben werden. Auf diese Weise wird dann ein Entfernen des Ethernet-Steckverbinders 1 und auch der darin angeordneten Kontaktelemente 4a, 4b entgegen der Einsteckrichtung E vom Gegensteckverbinder 100 verhindert.

An einem bezüglich der Einsteckrichtung E vorderen Abschnitt 23 des Schirmblechs 20 sind im vorliegenden Ausführungsbeispiel zwei Kontaktlamellen 25a, 25b zur Kontaktierung eines Schirm-Gegenkontaktelements 61a, 61b angeordnet (in Fig. 1a ist davon nur ein kleiner Teil der Kontaktlamelle 25b zu erkennen).

Fig. 1b zeigt eine perspektivische, teilweise geschnittene Darstellung des Schirmblechs 20 des Ethernet-Steckverbinders aus Fig. 1a, bevor das Schirmblech 20 am Steckverbindergehäuse 2 festgelegt wird. Hier sind die beiden Kontaktlamellen 25a, 25b gut zu erkennen. Beide Kontaktlamellen 25a, 25b sind derart in den vom Schirmblech 20 umschlossenen Raum 24 umgebogen, dass die wenigstens eine Kontaktlamelle 25a, 25b zumindest abschnittsweise zwischen einer ersten Wand 27 des Schirmblechs 20 und dem Steckverbindergehäuse 2 angeordnet ist (siehe auch Figs. 1a und 2).

Die beiden Kontaktlamellen 25a, 25b sind derart in den vom Schirmblech 20 umschlossenen Raum 24 umgebogen, dass ein vom Gegensteckverbinder 100 in den Ethernet-Steckverbinder 1 zwischen eine der Kontaktlamellen 25a, 25b und die erste Wand 27 des Schirmblechs 20 eingestecktes Schirm-Gegenkontaktelement 61a, 61b von der betreffenden Kontaktlamelle 25a, 25b elektrisch kontaktiert wird.

In Fig. 1b ist gut zu erkennen, dass die wenigstens eine Kontaktlamelle 25a, 25b einen geprägten Kontaktpunkt 28a, 28b aufweist und dass auch die erste Wand 27 des Schirmblechs 20 einen geprägten weiteren Kontaktpunkt 29a, 29b aufweist, der dem Kontaktpunkt 28a, 28b der Kontaktlamelle 25a, 25b quer zur Einsteckrichtung E betrachtet gegenüberliegt. Ein zwischen einer der Kontaktlamellen 25a, 25b und der ersten Wand 27 eingeschobenes Schirm-Gegenkontaktelement 61a, 61b wird somit von zwei Seiten an einem definierten Punkt elektrisch kontaktiert.

Die beiden Kontaktlamellen 25a, 25b sind im dargestellten Ausführungsbeispiel einstückig mit dem Schirmblech 20 ausgebildet. Das Schirmblech 20 ist als Stanz-Biegeteil ausgebildet.

Fig. 2 zeigt eine perspektivische, teilweise geschnittene Darstellung einer Steckverbinderanordnung 200 mit einem Ethernet-Steckverbinder 1 aus Fig. 1a.

Die Steckverbinderanordnung 200 umfasst einen als Standard-Schnittstelle 101, ausgebildeten Gegensteckverbinder 100, hier lediglich beispielhaft eine vierreihige BOSCH Microflex-Schnittstelle 102. Der Gegensteckverbinder 100 umfasst bzw. enthält eine Mehrzahl von je zwei Gegenkontaktelemente 60a, 60b und zwei Schirm-Gegenkontaktelemente 61a, 61b bzw. weist diese auf. Die Steckverbinderanordnung 200 umfasst weiterhin einen oder mehrere Ethernet-Steckverbinderbinder 1, wie sie in Fig. 1a dargestellt sind. Die Mehrzahl der Ethernet-Steckverbinder 1 sind mit dem Gegensteckverbinder 100 zusammengesteckt. Grundsätzlich ist auch eine (hier nicht dargestellte) Steckverbinderanordnung 200 vorstellbar, die lediglich einen einzigen Ethernet-Steckverbinder 1 aufweist.

In der Darstellung der Figur 2 ist bei dem dem Betrachter zuweisenden Ethernet-Steckverbinder 1 das Steckverbindergehäuse 2 bewusst nicht dargestellt, um die Ausgestaltung des Schirmblechs 20 deutlicher zu machen. Das Steckverbindergehäuse 2 wäre oberhalb der nach hinten umgebogenen Kontaktlamellen 25a, 25b angeordnet, wenn es eingezeichnet wäre. Dies ist in den weiter hinten in der Bildebene gezeigten Ethernet-Steckverbindern 1 zu erkennen.

Die Gegenkontaktelemente 60a, 60b und die Schirm-Gegenkontaktelement 61a, 61b sind alle identisch ausgebildet, hier beispielhaft als im Querschnitt rechteckige Kontaktpins.

Die Ethernet-Kabel 65 sind im Ausführungsbeispiel mit einer Einzelkabelabdichtung 70 ringförmig umgeben, mit der ein Eindringen von Feuchtigkeit und Schmutz ins Innere der Steckverbinderanordnung 200 vermieden werden soll.

Die Kontaktelemente 4a, 4b sind als Stanz-Biegeteile aus einem Blech gefertigt. Die Leitungen 30a, 30b weisen einen elektrisch leitfähigen Kern 31a, 31b auf, der von einer Isolierung 32a, 32b umgeben ist. Die Kontaktelemente 4a, 4b sind jeweils mit einem Isoliercrimp an der Isolierung 32a, 32b befestigt und mit einem Leitungscrimp am elektrisch leitenden Kern 31a, 31b elektrisch leitfähig verbunden.

Nach dem Aufstecken der Mehrzahl der Ethernet-Steckverbinder 1 auf den Gegensteckverbinder 100, 101, 102 können die Kontaktelemente 4a, 4b und die Steckverbindergehäuse 2 der Ethernet-Steckverbinder 1 durch das Einschieben eines (hier nicht dargestellten) Sekundärverriegelungselements quer zur Einsteckrichtung E durch die Steckverbindergehäuse-Sekundärverriegelungsaussparungen 7 hindurch in dem Gegensteckverbinder 100 unverlierbar festgelegt werden.

## Patentansprüche

1. Ethernet-Steckverbinder für ein Kraftfahrzeug zum Zusammenstecken entlang einer Einsteckrichtung (E) mit einem Gegensteckverbinder, der Ethernet-Steckverbinder (1) aufweisend:
-- ein Steckverbindergehäuse (2) mit wenigstens zwei Kontaktkammern (3a, 3b);
-- ein Schirmblech (20);
-- ein Ethernet-Kabel (65) mit Leitungen (30a, 30b) und einem Schirmleiter (62); wobei in jeder Kontaktkammer (3a, 3b) ein Kontaktelement (4a, 4b) angeordnet ist; wobei in jedes Kontaktelement (4a, 4b) ein Gegenkontaktelement (60a, 60b) einsteckbar ist;
wobei an jedem Kontaktelement (4a, 4b) an seinem bezüglich der Einsteckrichtung (E) hinteren Ende eine Leitung (30a, 30b) angebracht ist;
wobei die an dem Kontaktelement (4a, 4b) angebrachten Leitungen (30a, 30b) in einem bezüglich der Einsteckrichtung (E) hinteren Abschnitt zum Ethernet-Kabel (65) zusammengefasst sind und dabei vom Schirmleiter (62) umgeben sind;
wobei das Schirmblech (20) das Steckverbindergehäuse (2) zum überwiegenden Teil umgibt;
wobei das Schirmblech (20) ein Verbindungsmittel (21) aufweist, mit dem es an dem Schirmleiter (62) des Ethernet-Kabels (65) elektrisch angeschlossen ist;
wobei an einem bezüglich der Einsteckrichtung (E) vorderen Abschnitt (23) des Schirmblechs (20) wenigstens eine Kontaktlamelle (25a, 25b) zur Kontaktierung eines Schirm-Gegenkontaktelements (61a, 61b) angeordnet ist,
**dadurch gekennzeichnet, dass**
die wenigstens eine Kontaktlamelle (25a, 25b) derart in den vom Schirmblech (20) umschlossenen Raum (24) umgebogen ist, dass die wenigstens eine Kontaktlamelle (25a, 25b) zumindest abschnittsweise zwischen einer ersten Wand (27) des Schirmblechs (20) und dem Steckverbindergehäuse (2) angeordnet ist, wobei die wenigstens eine Kontaktlamelle (25a, 25b) derart in den vom Schirmblech (20) umschlossenen Raum (24) umgebogen ist, dass ein vom Gegensteckverbinder (100) in den Ethernet-Steckverbinder (1) zwischen die wenigstens eine Kontaktlamelle (25a, 25b) und die erste Wand (27) des Schirmblechs (20) einsteckbares Schirm-Gegenkontaktelement (61a, 61b) sowohl von der wenigstens einen Kontaktlamelle (25a, 25b) als auch von der ersten Wand (27) des Schirmblechs (20) elektrisch kontaktiert wird.

2. Ethernet-Steckverbinder nach dem vorhergehenden Anspruch,
wobei die wenigstens eine Kontaktlamelle (25a, 25b) einen geprägten Kontaktpunkt (28a, 28b) aufweist,
wobei die erste Wand (27) des Schirmblechs (20) einen geprägten weiteren Kontaktpunkt (29a, 29b) aufweist, der dem Kontaktpunkt (28a, 28b) der Kontaktlamelle (25a, 25b) quer zur Einsteckrichtung (E) betrachtet gegenüberliegt.

3. Ethernet-Steckverbinder nach einem der vorhergehenden Ansprüche,
wobei die wenigstens eine Kontaktlamelle (25a, 25b) einstückig mit dem Schirmblech (20) ausgebildet ist
und/oder
wobei das Schirmblech (20) ein Stanz-Biegeteil ist.

4. Ethernet-Steckverbinder nach einem der vorhergehenden Ansprüche,
wobei die Leitungen (30a, 30b) im Ethernet-Kabel (65) umeinander verdrillt verlaufen.

5. Ethernet-Steckverbinder nach einem der vorhergehenden Ansprüche,
wobei die Kontaktkammern (3a, 3b) jeweils einen Kontaktkammer-Hinterschnitt (5a, 5b) aufweisen,
wobei die Kontaktelemente (4a, 4b) jeweils eine Kontaktelement-Rastlanze (6a, 6b) aufweisen,
so dass die in die Kontaktkammer (3a, 3b) eingesteckten Kontaktelemente (4a, 4b) mit der Kontaktelement-Rastlanze (6a, 6b) am Kontaktkammer-Hinterschnitt (5a, 5b) in der Kontaktkammer (3a, 3b) verrasten können,
oder
wobei die Kontaktkammern (3a, 3b) jeweils eine Kontaktkammer-Rastlanze aufweisen,
wobei die Kontaktelemente (4a, 4b) jeweils einen Kontaktelement-Hinterschnitt aufweisen,
so dass die in die Kontaktkammern (3a, 3b) eingesteckten Kontaktelemente (4a, 4b) mit dem Kontaktelement-Hinterschnitt an der Kontaktkammer-Rastlanze in der Kontaktkammer (3a, 3b) verrasten können.

6. Ethernet-Steckverbinder nach einem der vorhergehenden Ansprüche,
wobei der Ethernet-Steckverbinder (1) dazu ausgebildet ist, mit einem Gegensteckverbinder (100) in Form einer Standard-Schnittstelle (101) zusammengesteckt zu werden.

7. Steckverbinderanordnung umfassend:
-- einen Gegensteckverbinder (100) mit wenigstens zwei Gegenkontaktelementen (60a, 60b) und wenigstens einem Schirm-Gegenkontaktelement (61a, 61b);
-- einen Ethernet-Steckverbinder (1) gemäß einem der vorhergehenden Ansprüche, wobei der Ethernet-Steckverbinder (1) mit dem Gegensteckverbinder (100) zusammensteckbar ist.

8. Steckverbinderanordnung nach dem vorhergehenden Anspruch,
wobei die wenigstens zwei Gegenkontaktelemente (60a, 60b) und das wenigstens eine Schirm-Gegenkontaktelement (61a, 61b) identisch ausgebildet sind.

9. Steckverbinderanordnung nach einem der beiden vorhergehenden Ansprüche, wobei der Gegensteckverbinder (100) in der Form einer Standard-Schnittstelle (101) ausgebildet ist.

10. Steckverbinderanordnung nach dem vorhergehenden Anspruch,
wobei die Standard-Schnittstelle (101) zweireihig oder vierreihig ausgebildet ist.

## Claims

1. Ethernet connector for a motor vehicle, for plug-connection to a mating connector along an insertion direction (E), the Ethernet connector (1) comprising:
- a connector housing (2) having at least two contact chambers (3a, 3b);
- a shield plate (20);
- an Ethernet cable (65) with wires (30a, 30b) and a shield conductor (62);
wherein a contact element (4a, 4b) is arranged in each contact chamber (3a, 3b);
wherein a mating contact element (60a, 60b) can be inserted into each contact element (4a, 4b);
wherein a wire (30a, 30b) is attached to each contact element (4a, 4b) at its rear end with respect to the insertion direction (E);
wherein the wires (30a, 30b), which are attached to the contact element (4a, 4b), are combined to form the Ethernet cable (65) in a section at the rear with respect to the insertion direction (E) and are surrounded by the shield conductor (62);
wherein the shield plate (20) surrounds the majority of the connector housing (2);
wherein the shield plate (20) has a connecting means (21) by way of which it is electrically connected to the shield conductor (62) of the Ethernet cable (65);
wherein at least one contact lamella (25a, 25b) for contacting a shield mating contact element (61a, 61b) is arranged at a section (23) of the shield plate (20) at the front with respect to the insertion direction (E),
**characterized in that**
the at least one contact lamella (25a, 25b) is bent into the space (24) enclosed by the shield plate (20) in such a way that the at least one contact lamella (25a, 25b) is arranged at least in sections between a first wall (27) of the shield plate (20) and the connector housing (2),
wherein the at least one contact lamella (25a, 25b) is bent into the space (24) enclosed by the shield plate (20) in such a way that a shield mating contact element (61a, 61b) which can be inserted from the mating connector (100) into the Ethernet connector (1) between the at least one contact lamella (25a, 25b) and the first wall (27) of the shield plate (20) is electrically contacted both by the at least one contact lamella (25a, 25b) and by the first wall (27) of the shield plate (20).

2. Ethernet connector according to the preceding claim,
wherein the at least one contact lamella (25a, 25b) has an embossed contact point (28a, 28b),
wherein the first wall (27) of the shield plate (20) has an embossed further contact point (29a, 29b), which is situated opposite the contact point (28a, 28b) of the contact lamella (25a, 25b) as viewed transversely to the insertion direction (E).

3. Ethernet connector according to either of the preceding claims,
wherein the at least one contact lamella (25a, 25b) is formed in one piece with the shield plate (20),
and/or
wherein the shield plate (20) is a stamped and bent part.

4. Ethernet connector according to any of the preceding claims,
wherein the wires (30a, 30b) run in the Ethernet cable (65) in a manner twisted around each other.

5. Ethernet connector according to any of the preceding claims,
wherein the contact chambers (3a, 3b) each have a contact chamber undercut (5a, 5b), wherein the contact elements (4a, 4b) each have a contact element latching lance (6a, 6b),
so that the contact elements (4a, 4b), which are inserted into the contact chamber (3a, 3b), can latch to the contact chamber undercut (5a, 5b) in the contact chamber (3a, 3b) by way of the contact element latching lance (6a, 6b),
or
wherein the contact chambers (3a, 3b) each have a contact chamber latching lance,
wherein the contact elements (4a, 4b) each have a contact element undercut, so that the contact elements (4a, 4b), which are inserted into the contact chambers (3a, 3b), can latch to the contact chamber latching lance in the contact chamber (3a, 3b) by way of the contact element undercut.

6. Ethernet connector according to any of the preceding claims,
wherein the Ethernet connector (1) is designed to be plug-connected to a mating connector (100) in the form of a standard interface (101).

7. Connector arrangement, comprising:
- a mating connector (100) having at least two mating contact elements (60a, 60b) and at least one shield mating contact element (61a, 61b);
- an Ethernet connector (1) according to any of the preceding claims, wherein the Ethernet connector (1) can be plug-connected to the mating connector (100).

8. Connector arrangement according to the preceding claim,
wherein the at least two mating contact elements (60a, 60b) and the at least one shield mating contact element (61a, 61b) are of identical design.

9. Connector arrangement according to either of the two preceding claims, wherein the mating connector (100) is designed in the form of a standard interface (101).

10. Connector arrangement according to the preceding claim,
wherein the standard interface (101) is of two-row or four-row design.

## Revendications

1. Connecteur Ethernet pour un véhicule à moteur destiné à être enfiché dans une direction d'enfichage (E) avec un connecteur correspondant, le connecteur Ethernet (1) comprenant :
- un boîtier (2) de connecteur avec au moins deux espaces de contact (3a, 3b) ;
- une tôle de blindage (20) ;
- un câble Ethernet (65) avec des fils conducteurs (30a, 30b) et un conducteur de blindage (62) ;
un élément de contact (4a, 4b) étant agencé dans chaque espace de contact (3a, 3b) ;
un élément de contact correspondant (60a, 60b) étant apte à être enfiché dans chaque élément de contact (4a, 4b) ;
un conducteur (30a, 30b) étant fixé à chaque élément de contact (4a, 4b) à son extrémité arrière par rapport au sens d'enfichage (E) ;
les fils conducteurs (30a, 30b) fixés à l'élément de contact (4a, 4b) étant regroupés dans une portion arrière par rapport au sens d'enfichage (E) pour former le câble Ethernet (65) et étant entourés par le conducteur de blindage (62) ;
la tôle de blindage (20) entourant en grande partie le boîtier du connecteur (2) ;
la tôle de blindage (20) présentant un moyen de connexion (21) qui permet de la raccorder électriquement au conducteur de blindage (62) du câble Ethernet (65) ;
au moins une lamelle de contact (25a, 25b) étant agencée sur une partie avant (23) de la tôle de blindage (20) par rapport au sens d'enfichage (E) pour établir le contact avec un élément de contact correspondant (61a, 61b) de blindage,
**caractérisé en ce que**
ladite au moins une lamelle de contact (25a, 25b) est repliée dans l'espace (24) entouré par la tôle de blindage (20) de telle sorte que ladite au moins une lamelle de contact (25a, 25b) est agencée au moins partiellement entre une première paroi (27) de la tôle de blindage (20) et le boîtier du connecteur (2),
ladite au moins une lamelle de contact (25a, 25b) étant repliée dans l'espace (24) entouré par la tôle de blindage (20) de telle sorte qu'un élément de contact correspondant (61a, 61b) de blindage apte à être inséré par le connecteur correspondant (100) dans le connecteur Ethernet (1) entre ladite au moins une lamelle de contact (25a, 25b) et la première paroi (27) de la tôle de blindage (20) soit amené en contact électrique à la fois avec ladite au moins une lamelle de contact (25a, 25b) et avec la première paroi (27) de la tôle de blindage (20).

2. Connecteur Ethernet selon la revendication précédente,
dans lequel ladite au moins une lamelle de contact (25a, 25b) présente un point de contact en relief (28a, 28b),
la première paroi (27) de la tôle de blindage (20) présentant un autre point de contact en relief (29a, 29b) qui, vu transversalement au sens d'enfichage (E), est situé en face du point de contact (28a, 28b) de la lamelle de contact (25a, 25b).

3. Connecteur Ethernet selon l'une des revendications précédentes,
dans lequel ladite au moins une lamelle de contact (25a, 25b) est réalisée d'un seul tenant avec la tôle de blindage (20)
et/ou
dans lequel la tôle de blindage (20) est une pièce découpée et pliée.

4. Connecteur Ethernet selon l'une des revendications précédentes,
dans lequel les fils conducteurs (30a, 30b) dans le câble Ethernet (65) sont torsadés les uns autour des autres.

5. Connecteur Ethernet selon l'une des revendications précédentes,
dans lequel les espaces de contact (3a, 3b) présentent chacun une contre-dépouille (5a, 5b) d'espace de contact,
les éléments de contact (4a, 4b) présentant chacun une languette d'encliquetage (6a, 6b) d'élément de contact,
de sorte que les éléments de contact (4a, 4b) insérés dans l'espace de contact (3a, 3b) soient aptes à venir en enclenchement avec la languette d'encliquetage (6a, 6b) d'élément de contact sur la contre-dépouille (5a, 5b) d'espace de contact, dans l'espace de contact (3a, 3b),
ou
les espaces de contact (3a, 3b) présentant chacun une languette d'encliquetage d'espace de contact,
les éléments de contact (4a, 4b) présentant chacun une contre-dépouille d'élément de contact,
de sorte que les éléments de contact (4a, 4b) insérés dans les espaces de contact (3a, 3b) soient aptes à venir en enclenchement avec la contre-dépouille d'élément de contact sur la languette d'encliquetage d'espace de contact dans l'espace de contact (3a, 3b).

6. Connecteur Ethernet selon l'une des revendications précédentes,
le connecteur Ethernet (1) étant conçu pour être connecté à un connecteur correspondant (100) sous la forme d'une interface standard (101).

7. Ensemble connecteur comprenant :
- un connecteur correspondant (100) avec au moins deux éléments de contact correspondants (60a, 60b) et au moins un élément de contact correspondant (61a, 61b) de blindage ;
- un connecteur Ethernet (1) selon l'une des revendications précédentes, le connecteur Ethernet (1) étant apte à être connecté au connecteur correspondant (100).

8. Ensemble connecteur selon la revendication précédente,
dans lequel lesdits au moins deux éléments de contact correspondants (60a, 60b) et ledit au moins un élément de contact correspondant (61a, 61b) de blindage sont de conception identique.

9. Ensemble connecteur selon l'une des deux revendications précédentes,
le connecteur correspondant (100) étant conçu sous la forme d'une interface standard (101).

10. Ensemble connecteur selon la revendication précédente,
dans lequel l'interface standard (101) est conçue en deux ou quatre rangées.
